Europäisches Patentamt

European Patent Office

Office européen des brevets

(19)

(11)     **EP 0 687 420 B1**

(12)     **FASCICULE DE BREVET EUROPEEN**

(45) Date de publication et mention
de la délivrance du brevet:
**17.07.2002   Bulletin 2002/29**

(51) Int Cl.⁷: **A23G 3/00**, A21D 13/08

(21) Numéro de dépôt: **95400369.5**

(22) Date de dépôt: **22.02.1995**

(54) **Composition alimentaire comportant un biscuit ou une coque de chocolat et un fourrage à base de produit laitier, fermenté ou non**

Nahrungsmittelzusammensetzung mit Keksen oder Schokolad Schalen und auf fermentierten oder nicht fermentierten milch Produkten basierten Füllungen

Foodstuff composition with biscuit or chocolate shell and a fermented or non fermented dairy product based filling

(84) Etats contractants désignés:
**AT BE CH DE DK ES GB GR IE IT LI LU MC NL PT SE**

(30) Priorité:  **23.02.1994  FR 9402036**

(43) Date de publication de la demande:
**20.12.1995   Bulletin 1995/51**

(73) Titulaire: **COMPAGNIE GERVAIS DANONE
92300 Levallois Perret (FR)**

(72) Inventeur: **Saintain, Michel
F-91640 Fontenay les Briis (FR)**

(74) Mandataire: **Warcoin, Jacques
Cabinet Régimbeau
20, rue de Chazelles
75847 Paris cedex 17 (FR)**

(56) Documents cités:
**EP-A- 0 246 197          EP-A- 0 256 561
EP-A- 0 283 101          EP-A- 0 338 121
EP-A- 0 344 651          DE-A- 2 725 103
FR-A- 583 399             FR-A- 1 321 489
FR-A- 2 378 456          FR-A- 2 598 889
FR-A- 2 639 796          US-A- 1 434 667**

**Description**

La présente invention concerne une composition alimentaire à base de produit laitier, et notamment de yoghourt.

Il existe dans le domaine des compositions alimentaires, et depuis un certain temps, des produits dénommés barres alimentaires à base de différents produits patissiers fourrés avec des produits chocolatés et/ou des produits sucrés divers.

Ce type de produit est perçu par le consommateur comme étant des produits longue conservation au même titre que les gâteaux secs par exemple.

Même si l'image de ces produits a évolué par la présentation de nouvelles spécialités dites tendres, il n'a pratiquement jamais été possible jusqu'à présent d'obtenir un produit ayant l'apparence d'une barre alimentaire mais qui puisse être perçu comme un produit frais ou semi-frais.

C'est l'objet de la présente invention de proposer une composition alimentaire ayant l'apparence et certaines des propriétés des barres alimentaires traditionnelles mais contenant une composition à base de produit laitier, fermenté, et plus particulièrement à base de yoghourt.

Il faut, tout d'abord, rappeler que le yoghourt est un produit obtenu par fermentation du lait avec un certain nombre de souches bactériennes parfaitement répertoriées et qui seules donnent le droit à l'appellation yoghourt ; mais surtout que le yoghourt est, parmi les spécialités de lait fermenté, l'une des seules dans lesquelles les bactéries lactiques sont encore vivantes lors de la consommation.

C'est précisément l'un des problèmes qui devait être résolu lors de l'élaboration d'une barre alimentaire contenant du yoghourt, à savoir le maintien en vie des bactéries lactiques sans pour autant favoriser le développement de contaminants tels que les moisissures ou levures.

En outre, la composition doit avoir une note de produit frais c'est -à- dire que sur le plan organoleptique, elle soit perçue comme "fraîche" mais qu'elle soit de préférence assimilable sur le plan réglementaire au produit frais c'est-à-dire un produit qui se conserve à 4 à 6° C pendant quelques semaines de préférence de l'ordre de 4 à 6 semaines.

Ce problème a été résolu grâce à la présente invention qui concerne plus particulièrement des compositions alimentaires du type comportant un biscuit ou une coque de chocolat et un fourrage à base de produit laitier fermenté caractérisées en ce que le fourrage contient des bactéries lactiques vivantes, a une activité de l'eau (Aw) comprise entre 0,75 et 0,86, de préférence 0,80 et 0,85, avant la mise en contact avec le biscuit ou la coque de chocolat, et ladite composition alimentaire étant équilibrée à un Aw entre 0,75 et 0,81 et en ce que la teneur en matières grasses du fourrage permet d'obtenir une émulsion de type eau dans l'huile et est de 15 à 35% en poids.

Ainsi, la composition alimentaire avec biscuit est l'objet d'une migration d'eau contrôlée du fourrage (Aw de l'ordre de 0,85) vers le biscuit (Aw de l'ordre de 0,25 à 0,45). L'équilibrage des Aw à une valeur entre 0,75 et 0,81 se produit en moins de 7 jours, ce qui permet au produit d'être déjà équilibré quand il est proposé au consommateur, et ce jusqu'à 4 semaines à 6 semaines après sa date de fabricaton, le produit étant conservé entre 4 et 6°C.

Cet équilibrage peut être obtenu notamment grâce à un fourrage au yoghourt caractérisé en ce qu'il comporte des bactéries vivantes et présente une Aw entre 0,75 et 0,86 et peut être obtenu par foisonnement d'une émulsion de type huile dans eau inversée, lors de la préparation du fourrage en émulsion de type eau dans l'huile, ladite émulsion comportant :

- de 25 à 50 % en poids de yoghourt,
- une quantité suffisante de matière grasse, par exemple de 15 à 35 %, pour permettre l'émulsion, ladite matière grasse étant une huile de coprah ou une matière grasse équivalente, et
- des dépresseurs d'Aw.

Ce type de fourrage permet également la préparation de barre chocolatée dans laquelle la migration de l'eau est maîtrisée par le caractère hydrophobe du fourrage et de la coque chocolat.

L'activité de l'eau d'un produit est une notion qui est bien connue dans le domaine alimentaire, cette mesure souvent abrégée sous forme de (Aw) mesure la disponibilité de l'eau dans un échantillon. Dans la plupart des cas, cette activité de l'eau n'est pas proportionelle à la teneur en eau du produit.

A titre d'exemple on peut mentionner :

- chocolat : environ 1 % d'eau : (Aw) = 0.50
- beurre : 16% d'eau : (Aw) = 0.99
- yaourt aux fruits : 82% d'eau : (Aw) = 0.99
- glycérol à 10% dans l'eau : (Aw) = 0.95

Les méthodes permettant la mesure de l'Aw d'un produit sont connues de l'homme du métier.

Comme cela a été indiqué précédemment, le fourrage à base de produit laitier fermenté sera de préférence à base de yoghourt, c'est-à-dire qu'il contiendra de 25 à 50% en poids de yoghourt. Les bactéries vivantes sont dans ce cas S.thermophilus et L.bulgaricus, mais il est également possible de prévoir la présence d'autres bactéries lactiques telles que par exemple L acidophilus ou bifidus.

Jusqu'à maintenant il n'a jamais été fabriqué et commercialisé en chaîne de froid positif (4 - 6°C) des barres alimentaires contenant du yoghourt frais comme ingrédient, ce dernier maintenant des ferments lactiques vivants, nombreux et actifs, jusqu'à la fin de la durée de vie du produit.

Le maintien en vie des bactéries du yoghourt nécessitant semble t-il une (Aw) très élevé (> 0.95), la protection contre les contaminations microbiennes par des Aw > 0.95 est très limitée et oblige donc à mettre en place des procédés décontaminants et des procédures d'hygiène strictes afin de permettre la conservation de ces produits. Il eut été possible de réaliser un biscuit stérile à 0,80 d'Aw pour ce type de produit, par contre la technologie à mettre en oeuvre aurait rendu le produit excessivement cher.

Or, on a pu mettre en évidence qu'il était possible d'obtenir des compositions à base de yoghourt dans lesquelles les bactéries demeurent viables, sous réserve de maintenir une activité d'eau entre 0.75 et 0.86, notamment 0,80 et 0,85.

Dans ces conditions, on peut également inhiber la croissance des contaminants les plus courants du biscuit et leur propagation dans le fourrage, le pH étant alors compris entre 4,4 et 5..

De préférence, la composition de la présente invention comporte un fourrage contenant de 25 à 50% en poids de yoghourt, le fourrage ayant été formulé pour réduire la disponibilité de l'eau par les procédés suivants :

- utilisation de dépresseurs d'Aw
- préparation d'une émulsion de type "huile dans eau" inversée en émulsion "eau dans huile" .

On combine de préférence les deux procédés précédemment cités.

Ainsi, on stabilise l'eau de la phase aqueuse en introduisant dans le produit laitier une certaine quantité de matières grasses, notamment d'origine végétale, jusqu'à former une émulsion de type eau dans l'huile, en encapsulant l'eau et ses solutés. Pour ce faire on peut utiliser notamment de l'ordre de 15 à 35 %, de préférence de 25 à 30%, en poids de matières grasses d'origine végétale.

Les matières grasses selon la présente invention sont, de préférence, des huiles de coprah ou des huiles équivalentes. Ces matières grasses utilisées sont cristallisées à une température comprise entre 15 et 25°C et liquéfiées à une température supérieure à 35°C et présentent une température de demi-ramollissement de l'ordre de 25 à 28°C ou plage de fusion entre 24 et 30° C.

L'émulsion obtenue dans ces conditions est très stable mais se liquéfie en bouche avec une note de produit frais.

Afin d'améliorer les caractéristiques de fraîcheur et de fondant du fourrage, on utilise un taux de foisonnement supérieur à 30 %, de préférence de 60 à 70 %, par injection d'un gaz inerte. Dans certains cas, le taux de foisonnement pourra atteindre ou dépasser 200 %.

Ainsi, il est possible, pour diminuer l'Aw, d'augmenter la teneur en sucres du produit laitier, par exemple en ajoutant des sucres tels que le glucose sous forme de sirop de glucose, le maltose, les maltodextrines ou bien des polyols tels que le sorbitol. On préférera utiliser des sucres dont la composition n'augmente pas trop le pouvoir sucrant du milieu de façon à garder à la barre alimentaire une note de produit frais. Le glycérol constituera également un bon dépresseur de l'Aw.

La quantité des sucres ajoutée pourra être comprise entre 10 et 40 % surtout de 20 à 40 % en poids du fourrage à base de produit laitier fermenté.

De façon générale la quantité totale des sucres et des matières grasses autre que le yoghourt sera comprise entre 25 et 75% surtout de 40 à 70 % de la composition. Le produit laitier fermenté pourra comprendre, outre le yoghourt et les composants cités précédemment, d'autres composants habituels dans ce domaine, même si au demeurant on évitera d'avoir recours à des additifs qui pourraient diminuer la note de "produit frais".

On peut, dans ces conditions, obtenir des Aw pour le fourrage à base de produit laitier fermenté ou non de l'ordre de 0,80 à 0,86.

Le biscuit utilisable peut être de tout type connu dans ce domaine mais devra répondre à trois contraintes :

- rester ferme après équilibrage des Aw,
- ne pas être collant au contact de la main après équilibrage des Aw
- absorber suffisamment d'eau et la lier, afin de participer à l'abaissement de l'Aw du fourrage.

Par la terminologie biscuit, on entend aussi bien désigner des produits de type génoise que de type biscuit sec ou pâte équivalente utilisable en biscuiterie.

La combinaison de ces deux types de produits, biscuit et fourrage, à Aw décrites permet à la fois de provoquer et de maîtriser la migration d'eau du fourrage à base de produit laitier vers le biscuit, ce qui confère la texture désirée et ses qualités organoleptiques tout en ne permettant pas la croissance des contaminants provenant du biscuit. Grâce à la composition selon l'invention, il n'est pas nécéssaire de fabriquer un biscuit dans des conditions stériles, et l'on maintient la survie des bactéries du yoghourt afin de pouvoir bénéficier de l'appellation légale et de ses effets santé.

Bien que le produit fini, en particulier, le fourrage à base de produit laitier fermenté n'ait, de préférence, pas subi de traitement thermique, on peut se passer de conditions drastiques de fabrications stériles pour l'assemblage du biscuit ou coque chocolat et du fourrage laitier, ce qui rend même possible des mélanges du fourrage à base de produit laitier fermenté avec des produits tels que les fruits au sirop, les fruits semi-confits, les fruits confits, les fruits secs, les chocolats et produits dérivés, ces composants étant pratiquement impossibles à stériliser par les moyens classiques sans qu'ils perdent une part notable de leurs qualités organoleptiques. Dans le cadre de la présente invention , la composition notamment en poids du fourrage n'incorpore pas les produits mentionnés précédemment, le fourrage est dit "fourrage blanc".

Bien entendu, la composition alimentaire selon la présente invention peut présenter de nombreuses formes, la forme la plus simple est celle de la barre alimentaire dans laquelle le fourrage à base de produit laitier fermenté est pris entre deux couches de biscuit, mais il est évidemment possible de prévoir d'autres modes de réalisation pour lesquels le produit laitier fermenté et la couche de biscuit sont agencés de façon différente. Il en est de même pour la barre chocolatée avec le fourrage notamment à base de yoghourt recouvert de caramel et de fruits secs, le tout enrobé de chocolat.

Il est à noter que la présente invention concerne également le fourrage à base de produit laitier fermenté puis traité thermiquement pour tuer les bactéries, le produit étant alors assimilable à un produit laitier non fermenté.

Il convient enfin de remarquer que la présente invention concerne également le nouveau fourrage à base de produit laitier fermenté en lui-même, puisqu'il s'agit d'un produit qui constitue en quelque sorte un yoghourt solide qui présente les qualités organoleptiques d'un produit frais mais qui, néanmoins, n'est pas sujet au développement d'agents contaminants et qui peut, dans ces conditions, être utilisé éventuellement seul, notamment sur ou dans un support non comestible, pot ou boite, tube par exemple, ou bien avec des supports comestibles mais non mouillables ou peu mouillables tels que des pains azymes ou des couches chocolatées par exemple.

Les exemples suivant donnent des formules présentant les caractéristiques des produits selon la présente invention. L'association des différents produits obtenus conduit à une survie importante des bactéries lactiques du yoghourt après 28 jours de conservation à 4°C. Dans ces conditions, la plupart des souches de levure, moisissures et de contaminants pathogènes ne se développent pas de manière notable, en particulier quand les compositions ont des Aw inférieures à 0.86, les produits étant conservés à 4°C.

| FORMULE FOURRAGE | | |
|---|---|---|
| INGREDIENTS | POURCENTAGES | POURCENTAGES POSSIBLES |
| Yoghourt | 33,2 | 30-35 |
| Glucose | 17 | 15-20 |
| Maltose | 6 | 4-8 |
| Autres sucres | 2 | 0-5 |
| Gélatine | 1,5 | 0,3-1,5 |
| Gomme de guar | 0,3 | 0,1-0,5 |
| (Polyol) Sorbitol | 5 | 4-6 |
| Eau | 2 | 0-5 |
| Matières grasses | 28 | 25-30 |
| Emulsifiants | 1 | 1-5 |
| Protéines laitières | 4 | 0-6 |
| | | 100 |

| BARRES LAITIERES | | |
|---|---|---|
| Exemple formule sandwich | biscuit | 40 % |
| | fourrage | 60 % |
| Exemple barre chocolatée | chocolat | 45 % |

(suite)

| BARRES LAITIERES | |
|---|---|
| | fourrage     55 % |

La fabrication du fourrage peut être réalisée comme suit : au yohourt sont rajoutés progressivement sous agitation lente les sucres ainsi que les protéines laitières et l'émulsifiant.

A ce mélange aqueux on additionne les matières grasses contenant les gélifiants en suspension, ce qui forme l'émulsion huile dans eau. L'inversion de cette émulsion est obtenue par agitation violente pendant quelques minutes, pendant lesquelles le fourrage est foisonné.

## EVOLUTION  ACTIVITE  DE  L'EAU

## PENDANT  LA  CONSERVATION  A  4°C

### A W

|  | Biscuit  A | Fourrage | Produit  fini |
|---|---|---|---|
| J = 0 | 0,25 | 0,85 | - |
| J + 7 | 0,65 | 0,81 | 0,75 |
| J = 14 | 0,68 | 0,80 | 0,73 |
| J + 21 | 0,73 | 0,78 | 0,74 |
| J + 28 | 0,74 | 0,77 | 0,74 |

### A W

|  | Biscuit  B | Fourrage | Produit  fini |
|---|---|---|---|
| J = 0 | 0,43 | 0,86 | - |
| J + 7 | 0,75 | 0,78 | 0,75 |
| J = 14 | 0,77 | 0,80 | 0,80 |
| J + 21 | 0,80 | 0,80 | 0,80 |
| J + 28 | 0,81 | 0,80 | 0,81 |

## Revendications

1.  Composition alimentaire de type comportant un biscuit ou une coque de chocolat et un fourrage à base de produits laitiers fermentés, **caractérisée en ce que** le fourrage contient des bactéries lactiques vivantes, a une activité de l'eau (Aw) comprise entre 0,75 et 0,86 avant la mise en contact avec le biscuit ou la coque, **en ce que** ladite composition alimentaire est équilibrée à une Aw entre 0,75 et 0,81 et **en ce que** la teneur en matières grasses du fourrage permet d'obtenir une émulsion de type eau dans huile et est de 15 à 35% en poids.

**2.** Composition selon la revendication 1, **caractérisée en ce que** le fourrage à base de produits laitiers fermentés ou non n'a pas subi de traitement thermique.

**3.** Composition selon l'une des revendications 1 et 2, **caractérisée en ce que** l'activité de l'eau du fourrage est comprise entre 0,80 et 0,85.

**4.** Composition selon l'une des revendications 1 à 3, **caractérisée en ce que** le fourrage est à base de yoghourt.

**5.** Composition selon la revendication 4, **caractérisée en ce que** le fourrage contient de 25 à 50% de yoghourt.

**6.** Composition selon l'une des revendications 1 à 5, **caractérisée en ce que** le fourrage laitier contient une quantité de sucres comprise entre 10 et 40% en poids.

**7.** Composition selon la revendication 6, **caractérisée en ce que** les sucres sont choisis parmi le glucose, le maltose et les polyols.

**8.** Composition selon l'une des revendications 1 à 7, **caractérisée en ce que** dans le fourrage laitier, la quantité totale de sucres et de matières grasses autre que le yoghourt est comprise entre 25 et 75 % en poids.

**9.** Composition selon l'une des revendications 1 à 9, **caractérisée en ce que** le fourrage à base de produits laitiers est placé entre deux couches de biscuit.

**10.** Composition selon l'une des revendications 1 à 8, **caractérisée en ce que** le yoghourt, le fourrage comporte des fruits ou des produits dérivés de fruits.

**11.** Composition selon l'une des revendications 1 à 10, **caractérisée en ce que** le fourrage a un taux de foisonnement supérieur à 30 %.

**12.** Composition selon l'une des revendications 1 à 11, **caractérisée en ce que** l'émulsion de type eau dans l'huile est obtenue par inversion d'une émulsion huile dans l'eau.

**13.** Fourrage utilisable dans l'une des compositions selon l'une des revendications 1 à 12.

**14.** Fourrage au yoghourt selon la revendication 13, **caractérisé en ce qu'**il comporte des bactéries vivantes et présente une Aw entre 0,75 et 0,86 et peut être obtenu par foisonnement d'une émulsion de type eau dans l'huile, ladite émulsion comprenant:

- de 25 à 50% en poids de yoghourt,
- de 15 à 35% de matières grasses pour permettre l'émulsion, lesdites matières grasses étant des huiles de coprah ou une matière grasse équivalente, et
- des dépresseurs d'Aw.

**15.** Fourrage selon la revendication 14, **caractérisé en ce que** la matière grasse utilisée est cristallisée à une température comprise entre 15 et 25°C et liquéfiée à une température supérieure à 35°C et présente une température de demi-ramollissement de l'ordre de 25 à 28°C ou plage de fusion entre 24 et 30°C.

**16.** Fourrage selon l'une des revendications 13 à 15, **caractérisé en ce que** la matière grasse représente de 20 à 40% en poids de l'émulsion.

**17.** Barre chocolatée, **caractérisée en ce qu'**elle comporte une coque de chocolat dans laquelle se trouve un fourrage selon l'une des revendications 13 à 16.

**18.** Barre chocolatée selon la revendication 17, **caractérisée en ce qu'**elle comporte, en outre, une couche de caramel superposée à celle du fourrage à base de yoghourt.

**Claims**

1. Food composition of the type containing a biscuit or a chocolate shell and a filling based on fermented dairy products, **characterized in that** the filling contains live lactic acid bacteria, has a water activity (Aw) of between 0.75 and 0.86, before being brought into contact with the biscuit or the shell, and **in that** the said food composition is equilibrated at an Aw of between 0.75 and 0.81 and **in that** the fat content of the filling is such that it makes it possible to obtain a water-in-oil type emulsion and is from 15 to 35% by weight.

2. Composition according to Claim 1, **characterized in that** the fermented or unfermented dairy product-based filling has not been subjected to a heat treatment.

3. Composition according to either of Claims 1 and 2, **characterized in that** the water activity of the filling is between 0.80 and 0.85.

4. Composition according to one of Claims 1 to 3, **characterized in that** the filling is based on yoghurt.

5. Composition according to Claim 4, **characterized in that** the filling contains 25 to 50% yoghurt.

6. Composition according to one of Claims 1 to 5, **characterized in that** the dairy filling contains a quantity of sugars of between 10 and 40% by weight.

7. Composition according to Claim 6, **characterized in that** the sugars are chosen from glucose, maltose and polyols.

8. Composition according to one of Claims 1 to 7, **characterized in that**, in the dairy filling, the total quantity of sugars and fats other than the yoghurt is between 25 and 75% by weight.

9. Composition according to one of Claims 1 to 8, **characterized in that** the dairy product-based filling is placed between two layers of biscuit.

10. Composition according to one of Claims 1 to 9, **characterized in that** the yoghurt, the filling contains fruit or products derived from fruit.

11. Composition according to one of Claims 1 to 10, **characterized in that** the filling has a percentage overrun greater than 30%.

12. Composition according to one of Claims 1 to 11, **characterized in that** the water-in-oil type emulsion is obtained by reversion of an oil-in-water emulsion.

13. Filling which can be used in one of the compositions according to one of Claims 1 to 12.

14. Yoghurt filling according to Claim 13, **characterized in that** it contains live bacteria and has an Aw of between 0.75 and 0.86 and can be obtained by overrun of a water-in-oil type emulsion, the said emulsion comprising:

    - from 25 to 50% by weight of yoghurt,
    - from 15 to 35% of fats to allow the emulsion, the said fats being copra oils or an equivalent fat,
    - from 15 to 35% of fats to allow the emulsion, the said fats being copra oils or an equivalent fat, and
    - Aw depressants.

15. Filling according to Claim 14, **characterized in that** the fat used is crystallized at a temperature of between 15 and 25°C and liquefied at a temperature greater than 35°C and has a semisoftening temperature of the order of 25 to 28°C or a melting range of between 24 and 30°C.

16. Filling according to one of Claims 13 to 15, **characterized in that** the fat represents from 20 to 40% by weight of the emulsion.

17. Chocolate bar, **characterized in that** it contains a chocolate shell in which a filling according to one of Claims 13 to 16 is present.

**18.** Chocolate bar according to Claim 17, **characterized in that** it contains, in addition, a caramel layer superposed on that of the yoghurt-based filling.

**Patentansprüche**

**1.** Nahrungsmittelzusammensetzung der Art, die einen Keks oder eine Schokoladenumhüllung und eine Füllung auf der Grundlage von fermentierten Milchprodukten umfaßt, **dadurch gekennzeichnet, daß** die Füllung lebende Milchsäurebakterien enthält, eine Aktivität des Wassers (Aw) von 0,75 bis 0,86 vor dem Inkontaktbringen mit dem Keks oder der Umhüllung aufweist, daß die Nahrungsmittelzusammensetzung bei einem Aw von 0,75 bis 0,81 äquilibriert ist und daß der Gehalt an Fettsubstanzen der Füllung gestattet, eine Emulsion der Art Wasser in Öl zu erhalten und 15 bis 35 Gew.-% beträgt.

**2.** Zusammensetzung nach Anspruch 1, **dadurch gekennzeichnet, daß** die Füllung auf der Grundlage von fermentierten oder nicht-fermentierten Milchprodukten keiner Wärmebehandlung unterzogen worden ist.

**3.** Zusammensetzung nach einem der Ansprüche 1 und 2, **dadurch gekennzeichnet, daß** die Aktivität des Wassers der Füllung 0,80 bis 0,85 beträgt.

**4.** Zusammensetzung nach einem der Ansprüche 1 bis 3, **dadurch gekennzeichnet, daß** die Füllung auf der Grundlage von Joghurt vorliegt.

**5.** Zusammensetzung nach Anspruch 4, **dadurch gekennzeichnet, daß** die Füllung 25 bis 50% Joghurt enthält.

**6.** Zusammensetzung nach einem der Ansprüche 1 bis 5, **dadurch gekennzeichnet, daß** die Milchfüllung eine Menge an Zuckern von 10 bis 40 Gew.-% enthält.

**7.** Zusammensetzung nach Anspruch 6, **dadurch gekennzeichnet, daß** die Zucker ausgewählt sind aus Glucose, Maltose und Polyolen.

**8.** Zusammensetzung nach einem der Ansprüche 1 bis 7, **dadurch gekennzeichnet, daß** in der Milchfüllung die Gesamtmenge an Zuckern und Fettsubstanzen außer dem Joghurt 25 bis 75 Gew.-% beträgt.

**9.** Zusammensetzung nach einem der Ansprüche 1 bis 8, **dadurch gekennzeichnet, daß** die Füllung auf der Grundlage von Milchprodukten zwischen zwei Kekslagen angeordnet ist.

**10.** Zusammensetzung nach einem der Ansprüche 1 bis 8, **dadurch gekennzeichnet, daß** der Joghurt, die Füllung Früchte oder von Früchten abgeleitete Produkte umfaßt.

**11.** Zusammensetzung nach einem der Ansprüche 1 bis 10, **dadurch gekennzeichnet, daß** die Füllung einen Aufquellungsgrad von mehr als 30% aufweist.

**12.** Zusammensetzung nach einem der Ansprüche 1 bis 11, **dadurch gekennzeichnet, daß** die Emulsion der Art Wasser in Öl durch Umkehr einer Öl-in-Wasser-Emulsion erhalten wird.

**13.** Füllung, verwendbar in einer der Zusammensetzungen nach einem der Ansprüche 1 bis 12.

**14.** Joghurtfüllung nach Anspruch 13, **dadurch gekennzeichnet, daß** sie lebende Bakterien umfaßt und einen Aw zwischen 0,75 und 0,86 aufweist und durch Aufquellen einer Emulsion der Art Wasser in Öl erhalten werden kann, wobei die Emulsion umfaßt:

- 25 bis 50 Gew.-% Joghurt,
- 15 bis 35 % Fettsubstanzen, um die Emulsion zu gestatten, wobei die Fettsubstanzen Kopraöle oder eine äquivalente Fettsubstanz sind, und
- Aw-Puffersubstanzen.

**15.** Füllung nach Anspruch 14, **dadurch gekennzeichnet, daß** die verwendete Fettsubstanz bei einer Temperatur von 15 bis 25°C kristallisiert ist und bei einer Temperatur über 35°C verflüssigt ist und eine Halb-Erweichungstemperatur in der Größenordnung von 25 bis 28°C oder einen Schmelzbereich zwischen 24 und 30°C aufweist.

16. Füllung nach einem der Ansprüche 13 bis 15, **dadurch gekennzeichnet, daß** die Fettsubstanz 20 bis 40 Gew.-% der Emulsion ausmacht.

17. Schokoladenriegel, **dadurch gekennzeichnet, daß** er eine Schokoladenumhüllung umfaßt, in welcher eine Füllung nach einem der Ansprüche 13 bis 16 vorhanden ist.

18. Schokoladenriegel nach Anspruch 17, **dadurch gekennzeichnet, daß** er darüber hinaus eine Karamellschicht über der Schicht der Füllung auf der Grundlage von Joghurt aufgebracht umfaßt.